(19) Europäisches Patentamt
European Patent Office
Office européen des brevets

(11) **EP 1 678 540 B1**

(12) **FASCICULE DE BREVET EUROPEEN**

(45) Date de publication et mention
de la délivrance du brevet:
**04.12.2013 Bulletin 2013/49**

(51) Int Cl.:
**G02B 6/122** *(2006.01)*    **G02B 6/42** *(2006.01)*

(21) Numéro de dépôt: **04805288.0**

(86) Numéro de dépôt international:
**PCT/FR2004/002726**

(22) Date de dépôt: **22.10.2004**

(87) Numéro de publication internationale:
**WO 2005/043205 (12.05.2005 Gazette 2005/19)**

(54) **DISPOSITIF DE COUPLAGE-DECOUPLAGE DE LUMIERE SELECTIF EN FREQUENCE**

FREQUENZSELEKTIVE LICHTKOPPLUNGS- UND ENTKOPPLUNGSEINRICHTUNG

FREQUENCY SELECTIVE LIGHT COUPLING AND DECOUPLING DEVICE

(84) Etats contractants désignés:
**AT BE BG CH CY CZ DE DK EE ES FI FR GB GR HU IE IT LI LU MC NL PL PT RO SE SI SK TR**

(30) Priorité: **30.10.2003 FR 0312752**

(43) Date de publication de la demande:
**12.07.2006 Bulletin 2006/28**

(73) Titulaire: **CENTRE NATIONAL DE LA RECHERCHE SCIENTIFIQUE (CNRS)**
**75794 Paris Cedex 16 (FR)**

(72) Inventeurs:
• **BENISTY, Henri**
**F-91120 Palaiseau (FR)**
• **SCHWOOB, Emilie**
**F-92310 Sevres (FR)**

(74) Mandataire: **Ramey, Daniel et al**
**Ernest Gutmann - Yves Plasseraud S.A.S.**
**3, rue Auber**
**75009 Paris (FR)**

(56) Documents cités:
EP-A- 1 136 853    FR-A- 2 841 658
US-A- 5 343 542    US-A- 5 559 912
US-A- 6 093 246    US-A1- 2001 012 149
US-A1- 2002 191 905    US-B1- 6 310 991

• TOKUSHIMA M ET AL: "Photonic crystal line defect waveguide directional coupler" ELECTRONICS LETTERS, IEE STEVENAGE, GB, vol. 37, no. 24, 22 novembre 2001 (2001-11-22), pages 1454-1455, XP006017576 ISSN: 0013-5194
• KOSHIBA M: "WAVELENGTH DIVISION MULTIPLEXING AND DEMULTIPLEXING WITH PHOTONIC CRYSTAL WAVEGUIDE COUPLERS" JOURNAL OF LIGHTWAVE TECHNOLOGY, IEEE. NEW YORK, US, vol. 19, no. 12, décembre 2001 (2001-12), pages 1970-1975, XP001159835 ISSN: 0733-8724
• WAN KUANG ET AL.: OPTICS LETTERS, vol. 27, no. 18, 15 septembre 2002 (2002-09-15), pages 1604-1606, XP002321108

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 1 678 540 B1

## Description

L'invention concerne un dispositif de couplage-découplage de lumière sélectif en fréquence du type comprenant un guide d'ondes formé dans un composant à structure de cristal photonique.

Les cristaux photoniques sont des agencements périodiques d'éléments diélectriques à fort contraste d'indice. Des cristaux photoniques bi-dimensionnels peuvent être constitués par des réseaux de colonnes parallèles de matière diélectrique ou des réseaux de trous cylindriques parallèles formés dans un substrat diélectrique. Des guides d'ondes peuvent être formés dans ces composants par des rangées manquantes de colonnes ou de trous.

Le document US-A-6,310,991 décrit un circuit optique intégré dans lequel un composant à structure de cristal photonique est placé entre deux guides d'onde en silicium. Le composant à structure de cristal photonique comprend un guide d'onde longitudinal, qui est formé par l'absence de plusieurs rangées d'aiguilles, et un ou plusieurs guides d'onde latéraux, formés également par l'absence de rangées d'aiguilles et reliés au guide d'onde longitudinal.

Le document US 2002/191905 A1, décrit un dispositif de multiplexage en longueur d'onde comprenant un cristal photonique comportant au moins un guide d'onde et des canaux s'étendant perpendiculairement par rapport au guide d'onde. Les canaux sont reliés au guide d'onde par l'intermédiaire de microcavités optiques. Chaque microcavité permet de réaliser une sélection d'un mode à longueur d'onde donnée dans la lumière se propageant à l'intérieur du guide d'onde de manière à réorienter le mode à la fréquence donnée vers le canal associé à la microcavité.

Le document "Wavelength division multiplexing and demulltiplexing with photonic crystal waveguide couplers » (Koshiba, Journal of Lighwave Technology, vol 19, n°12, décembre 2001), décrit un dispositif dans lequel deux guides d'onde sont formés en parallèle dans un cristal photonique. Deux étages de ce type peuvent être reliés en cascade de manière à réaliser un dispositif de mutliplexage-démultiplexage à quatre canaux.

On sait, notamment par l'article "Mini-stopbands of one-dimensional system : the channel waveguide in a two dimensional photonic crystal" de S. Olivier, M. Rattier, H. Benisty, C. Weisbuch et al., Physical Review B, vol. 63, 113311 du 1er mars 2001, qu'un guide d'onde dans un cristal photonique présente des bandes photoniques interdites ou mini-stopbands (MSB) en raison d'un couplage entre le mode fondamental et des modes d'ordre élevé dans le guide d'onde, les fréquences de ces bandes de non-transmission étant déterminées notamment par des paramètres dimensionnels du cristal photonique (période, dimension et forme des éléments, facteur de remplissage, ...) et par la largeur du guide d'onde.

L'invention a notamment pour but d'utiliser cette particularité des guides d'onde formés dans des cristaux photoniques, pour réaliser des dispositifs de couplage-découplage de lumière sélectifs en fréquence.

Elle propose à cet effet un dispositif de couplage-découplage de lumière sélectif en fréquence, comprenant un composant à structure de cristal photonique constitué d'une pluralité d'éléments diélectriques à répartition spatiale périodique et dans lequel un guide d'onde encadré le long de ses bords longitudinaux par des rangées desdits éléments, est formé par une absence d'au moins une rangée de ces dits éléments diélectriques et/ou par un décalage des rangées desdits éléments de part et d'autre du guide d'onde, caractérisé en ce que, sur l'un au moins desdits bords longitudinaux, le nombre de rangées desdits éléments diélectriques est réduit pour définir un bord aminci du guide d'onde et former des zones de couplage entre le guide d'onde et l'extérieur du cristal photonique pour des fréquences de couplage, chaque zone permettant d'extraire du guide d'onde et sensiblement perpendiculairement à celui-ci une composante à une fréquence correspondante d'un signal lumineux propagé dans le mode fondamental du guide d'onde et/ou d'injecter dans le guide d'onde et sensiblement perpendiculairement à celui-ci une composante à cette fréquence d'un signal lumineux, les fréquences de couplage étant comprises dans une bande photonique interdite ou MSB du guide d'onde et étant définies par des variations des paramètres dimensionnels du guide d'onde et/ou du cristal photonique le long des bords longitudinaux du guide d'onde, la longueur de chaque zone de couplage correspondant à quelques dizaines de périodes spatiales desdits éléments diélectriques.

Comme, dans un guide d'onde formé dans un cristal photonique, une bande photonique interdite ou MSB résulte d'un couplage entre le mode fondamental et un mode d'ordre élevé du guide d'onde, et que le mode d'ordre élevé peut pénétrer assez profondément dans la partie du cristal photonique bordant le guide d'onde, on peut extraire de ce guide d'onde le signal dans le mode d'ordre élevé en amincissant la partie du cristal photonique qui borde le guide d'onde dans la zone de couplage, c'est-à-dire en réduisant dans cette zone le nombre de rangées d'éléments diélectriques à répartition périodique qui définissent le cristal photonique.

On peut ainsi extraire du guide d'onde une composante fréquentielle du signal propagé dans le mode fondamental, la fréquence de cette composante étant comprise dans une bande photonique interdite ou MSB du guide d'onde.

Le nombre de rangées desdits éléments diélectriques formant le bord aminci du cristal photonique est typiquement compris entre deux et six, au moins, dans la zone d'extraction de ladite composante fréquentielle.

L'invention permet de réaliser un dispositif de couplage-découplage de lumière sélectif en fréquence à plusieurs voies, permettant de coupler ou découpler des signaux à des fréquences différentes.

A cette fin, la largeur du guide d'onde peut varier, de façon continue ou par paliers, entre les extrémités du guide d'onde.

En variante, la période spatiale des éléments diélectriques du cristal photonique peut varier, de façon continue ou par paliers, entre les extrémités du guide d'onde.

Dans d'autres variantes, c'est la forme ou la dimension des éléments du cristal photonique que l'on fait varier entre les extrémités du guide d'onde, pour faire varier les fréquences de couplage et la force de couplage.

Selon une autre caractéristique de l'invention, les rangées d'éléments diélectriques qui forment une zone de couplage sur un bord aminci du guide d'onde sont déformées pour constituer une lentille convergente ou divergente vers l'extérieur du guide d'onde.

Cela permet notamment de faire converger vers un capteur le signal lumineux correspondant à la composante fréquentielle extraite du guide d'onde, ou inversement de faire converger à l'intérieur du guide d'onde un signal lumineux correspondant à une composante fréquentielle injectée dans le guide d'onde à travers la zone de couplage.

Selon encore une autre caractéristique de l'invention, au moins un détecteur, tel par exemple qu'une photodiode intégrée, est placé le long d'une zone de couplage à l'extérieur du guide d'onde pour capter la composante fréquentielle extraite du signal lumineux propagé dans le mode fondamental du guide d'onde.

On peut ainsi contrôler de façon simple le contenu fréquentiel (dans les bandes photoniques interdites) d'un signal propagé dans le mode fondamental du guide d'onde.

En disposant plusieurs photodétecteurs le long des zones de couplage à l'extérieur du guide d'onde du dispositif selon l'invention, on peut capter les différentes composantes fréquentielles comprises dans les bandes photoniques interdites ou MSB, d'un signal lumineux injecté dans le guide d'onde dans le mode fondamental.

On peut aussi, en associant ce dispositif à la face arrière d'une diode laser, détecter et surveiller la fréquence du faisceau laser émise par la diode.

Cela permet aussi de contrôler et de commander la fréquence du faisceau laser émise par une diode laser accordable.

Le dispositif selon l'invention est également utilisable pour le couplage de composantes fréquentielles dans le guide d'onde du cristal photonique, et peut alors constituer un dispositif de multiplexage de ces composantes fréquentielles.

Le dispositif selon l'invention utilisé en multiplexage peut servir à l'hétérodynage de deux signaux lumineux de fréquences proches dont l'un porte une information modulée en amplitude, en fréquence ou en phase. Dans le guide d'onde, les signaux sont alors mélangés de façon linéaire. Au moyen d'une photodiode placée au bout du guide d'onde, on peut détecter un signal électrique à la différence des fréquences des signaux, ce qui permet de retrouver l'information portée par l'un de ces signaux.

L'invention sera mieux comprise et d'autres caractéristiques, détails et avantages de celle-ci apparaîtront plus clairement à la lecture de la description qui suit, faite à titre d'exemple en référence aux dessins annexés dans lesquels :

- les figures 1, 2 et 3 représentent schématiquement différents modes de réalisation d'un dispositif de couplage - découplage selon l'invention ;
- la figure 4 représente schématiquement un dispositif selon l'invention formé avec une lentille convergente ;
- la figure 5 représente schématiquement un dispositif selon l'invention formé avec une lentille divergente ;
- les figures 6 et 7 représentent schématiquement des dispositifs selon l'invention destinés à la détection des composantes fréquentielles d'un signal lumineux ;
- la figure 8 représente schématiquement un dispositif selon l'invention utilisé en multiplexeur ;
- la figure 9 représente schématiquement un dispositif selon l'invention associé à une diode laser pour la détection de la fréquence du faisceau laser émis ;
- la figure 10 représente schématiquement un dispositif selon l'invention associé à une diode laser accordable pour la détection et la commande de la fréquence du faisceau laser émis ;
- la figure 11 représente schématiquement un exemple de réalisation d'un dispositif selon l'invention ;
- la figure 12 représente schématiquement les courbes des composantes fréquentielles extraites du guide d'onde par les différents canaux de sortie du dispositif de la figure 11.

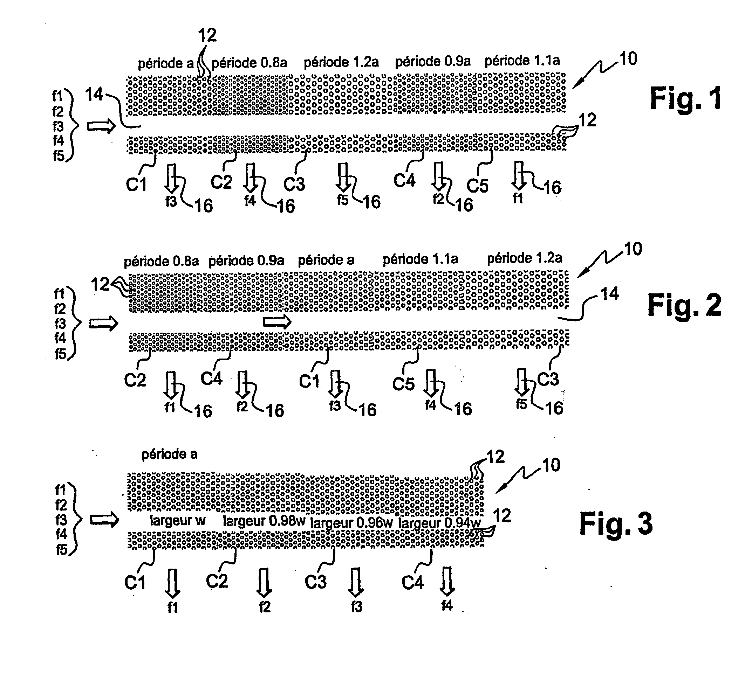

On se réfère d'abord aux figures 1, 2 et 3 qui représentent schématiquement trois modes de réalisation d'un dispositif selon l'invention.

Ce dispositif comprend essentiellement un composant 10 à structure de cristal photonique, qui est constitué par un réseau d'éléments diélectriques à répartition périodique tels par exemple que des rangées de trous cylindriques 12 formés dans un substrat diélectrique ou semiconducteur ayant un indice de réfraction qui est par exemple voisin de 3.

Le cristal photonique ainsi réalisé a une forme rectangulaire allongée, avec une longueur qui peut être de l'ordre de plusieurs centaines de fois la période spatiale a des éléments diélectriques 12 et une largeur qui peut être comprise entre une dizaine et plusieurs dizaines de fois la période spatiale a. Un guide d'onde longitudinal 14 multimode est formé dans le composant 10 par absence d'au moins une rangée d'éléments diélectriques 12, le nombre de rangées absentes étant typiquement compris entre 2 et 6.

Un guide d'onde peut être créé dans un cristal photonique d'une autre façon, par exemple par séparation de deux parties d'un cristal photonique et déplacement de ces deux parties en les décalant dans l'axe du guide et/ou dans la direction perpendiculaire dans le plan du cristal, le décalage dans l'axe du guide ayant une valeur quelconque comprise entre 0 et une demi-période.

De façon plus générale, le guide d'onde peut donc être formé par une absence d'éléments périodiques entre deux parties d'un cristal photonique.

Lorsque le guide d'onde 14 est formé par une ou plusieurs rangées manquantes d'éléments périodiques 12 dans un cristal photonique, plusieurs modes peuvent coexister dans le guide d'onde et la forte périodicité des bords du guide d'onde à l'échelle de la longueur d'onde du signal propagé conduit ces modes à se coupler, c'est-à-dire que ces modes sont réciproquement diffractés l'un dans l'autre. Le couplage des modes a lieu à une fréquence précise qui est déterminée en fonction de paramètres caractéristiques du cristal photonique et du guide d'onde et nécessite un certain nombre de périodes spatiales a pour produire pleinement ses effets, ce nombre pouvant être de quelques dizaines de périodes et dépendant de la force de couplage et de la fraction de lumière à coupler (ou découpler).

Lorsque les deux modes couplés sont de nature très différente, le mode d'ordre le plus élevé peut pénétrer assez profondément dans la partie du cristal photonique qui borde la zone de couplage dans le guide d'onde 14. En réduisant la largeur du cristal photonique dans cette zone, c'est-à-dire en diminuant le nombre de rangées d'éléments 12 qui bordent le cristal photonique dans cette zone, on peut favoriser l'extraction hors du guide d'onde du mode d'ordre élevé qui tend à diriger son flux d'énergie dans une direction sensiblement perpendiculaire au guide d'onde.

Dans les dispositifs selon l'invention qui sont représentés auxfigures 1 à 3, le guide d'onde 14 est délimité d'un côté par un nombre relativement élevé de rangées d'éléments diélectriques 12, empêchant l'extraction des modes d'ordre élevé dans les zones de couplage, et par un nombre réduit de rangées d'éléments 12 de l'autre côté, pour l'extraction à travers ces rangées des modes d'ordre élevé dans les zones de couplage, comme indiqué par les flèches 16.

Ce nombre réduit de rangées est un compromis entre la nécessité de maintenir un mode d'ordre élevé bien défini, ce qui nécessite une largeur maximale du bord du guide d'onde, et les pertes encourues par la lumière de ce mode à la traversée de ce bord du guide d'onde.

Le dispositif selon l'invention représenté en figure 1 comprend cinq zones de couplage C1 - C5 qui ont sensiblement la même longueur et qui diffèrent l'une de l'autre par les périodes des éléments diélectriques 12 du cristal photonique. Dans la zone C1, cette période est égale à a, dans la zone C2 elle est égale à 0,8 a, dans la zone C3 elle est égale à 1,2 a, dans la zone C4 elle est égale à 0,9 a et dans la zone C5 elle est égale à 1,1 a. A ces zones de couplage correspondent des fréquences de couplage f1-f5. Ces fréquences varient en sens inverse de la période des éléments diélectriques 12 et la zone C3 ayant la période la plus élevée aura donc la fréquence de couplage f5 la plus faible, tandis que la zone de couplage C2 ayant la période la plus faible 0,8 a aura la fréquence de couplage f1 la plus élevée.

Lorsque des signaux lumineux ayant des composantes aux fréquences f1 - f5 sont injectés à l'extrémité du guide 14 dans le mode fondamental, les composantes fréquentielles de ces signaux sont extraites des zones de couplage C1 à C5 dans l'ordre des fréquences f3, f1, f5, f2 et f4.

Dans le mode de réalisation représenté schématiquement en figure 2, le composant 10 comprend les mêmes zones de couplage C1 à C5 mais celles-ci sont formées entre les extrémités longitudinales du guide d'onde dans l'ordre croissant des périodes spatiales de répartition des éléments diélectriques 12, c'est-à-dire dans l'ordre C2 - C4 - C1 - C5 - C3 entre l'entrée et la sortie du guide d'onde 14.

Lorsque des signaux lumineux ayant des composantes aux fréquences f1 à f5 sont injectés à l'entrée du guide d'onde 14 dans le mode fondamental, les composantes fréquentielles extraites du guide d'onde entre l'entrée et la sortie sont, dans l'ordre, f1, f2, f3, f4 et f5.

Dans le mode de réalisation de la figure 3, le composant 10 comprend quatre zones de couplage C1, C2, C3 et C4 de même longueur et ayant une même période a de répartition des éléments diélectriques 12 du cristal photonique, ces zones de couplage différant par la largeur du guide d'onde 14 qui diminue de la zone de couplage C1 à l'entrée du guide d'onde jusqu'à la zone de couplage C4 en sortie du guide d'onde. Comme représenté, le guide d'onde 14 a une largeur w dans la zone de couplage C1, une largeur égale à 0,98 w dans la zone de couplage C2, une largeur égale à 0,96 w dans la zone de couplage C3 et une largeur égale à 0,94 w dans la zone de couplage C4. Ces faibles variations de largeur assurent une très bonne transmission et une quasi-absence de réflexion des signaux lumineux d'une zone de couplage à la suivante.

A ces zones de couplage correspondent des fréquences de couplage f1, f2, f3 et f4 qui augmentent de f1 à f4.

Lorsque des signaux lumineux comportant des composantes aux fréquences f1 à f4 sont injectés à l'entrée du guide d'onde 14 dans le mode fondamental, la composante de fréquence f1 est extraite du guide d'onde dans la zone de couplage C1, la composante de fréquence f2 est extraite du guide d'onde dans la zone de couplage C2, la composante de fréquence f3 est extraite de la zone de couplage C3 et la composante f4 est extraite de la zone de couplage C4.

On peut bien entendu faire varier simultanément la période de répartition spatiale des éléments diélectrique 12 du cristal photonique et la largeur du guide d'onde 14.

On peut faire varier cette période spatiale et cette largeur par paliers comme représenté aux figures 1 à 3, ou de façon continue.

Lorsque le dispositif selon l'invention est utilisé en découplage comme représenté aux figures 1 à 3, il peut être avantageux que la partie du cristal photonique 10 qui forme le bord aminci du guide d'onde 14 comporte, au niveau d'une zone de couplage C une lentille convergente ou divergente en direction de l'extérieur du guide d'onde, selon que le dispositif est utilisé en découplage ou en couplage de lumière.

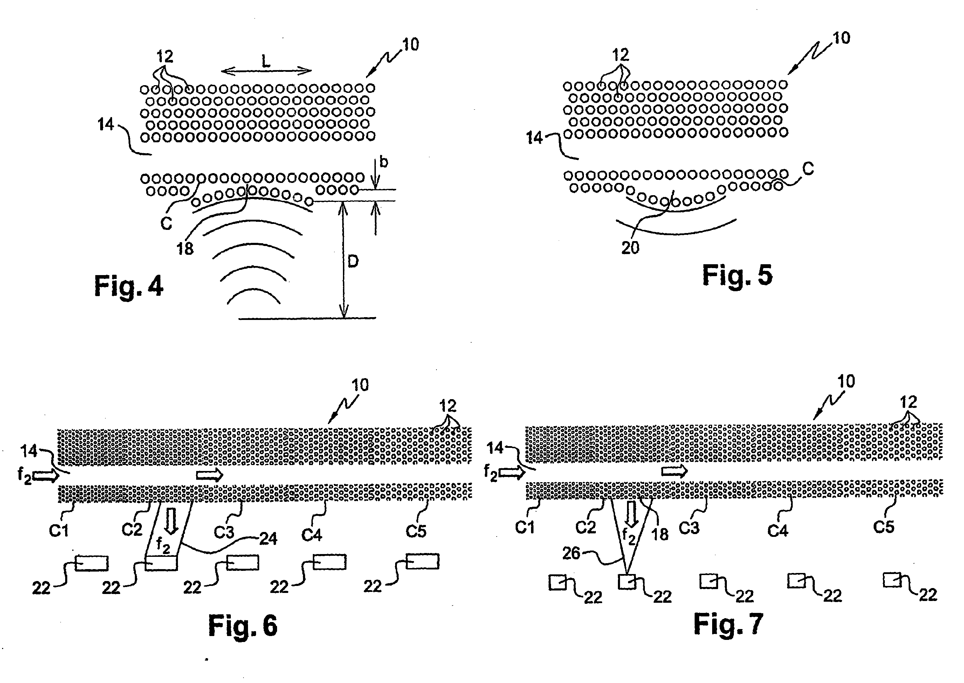

En figure 4, le guide d'onde 14 formé dans le cristal photonique 10 est délimité, le long de son bord aminci, par deux rangées d'éléments diélectriques 12 dont au moins l'une est déformée pour constituer une lentille 18 convergente vers l'extérieur du guide d'onde 14. Dans l'exemple représenté, la rangée extérieure d'éléments diélectriques 12 est rapprochée de la rangée intérieure de ces éléments au centre de la zone de couplage C d'une distance transversale b, pour constituer une lentille convergente de longueur focale D égale à $L^2/8bf$, L étant la longueur de la zone déformée de la rangée extérieure d'éléments diélectrique 12, b étant la déformation transversale de cette rangée, et f étant le facteur de remplissage du cristal photonique. On obtient ainsi une longueur focale de 100 $\mu$m pour une longueur L égale à 22 $\mu$m, une déformation b égale à 0,5 $\mu$m et un facteur de remplissage égal à 0,3.

Comme représenté en figure 5, une lentille 20 divergente vers l'extérieur du guide d'onde est formée par une déformation en sens inverse de la ou des rangées extérieures d'éléments 12 formant le bord aminci du guide d'onde 14 dans une zone de couplage, cette lentille divergente permettant de faire converger vers l'intérieur du guide d'onde une composante fréquentielle injectée de l'extérieur dans la zone de couplage correspondant à la lentille 20.

La figure 6 représente schématiquement un dispositif selon l'invention comportant une série de détecteurs 22 tels que des photodiodes intégrées, qui sont agencés le long du bord aminci du composant 10, chaque détecteur 22 se trouvant en regard d'une zone de couplage C1, C2, C3, C4 et C5 et les rangées d'éléments 12 du bord aminci étant conformées pour délivrer à chaque photodétecteur 22 un faisceau lumineux collimaté comprenant une composante fréquentielle de couplage entre le mode fondamental et un mode d'ordre élevé dans cette zone du guide d'onde 14.

La figure 7 représente une disposition semblable mais dans laquelle les rangées d'éléments diélectriques 12 définissant le bord longitudinal aminci du guide d'onde 14 situé en face des photodétecteurs 22 comportent des lentilles convergentes 18 pour focaliser sur ces photodétecteurs les composantes fréquentielles 26 extraites du guide d'onde dans les zones de couplage C1 - C5.

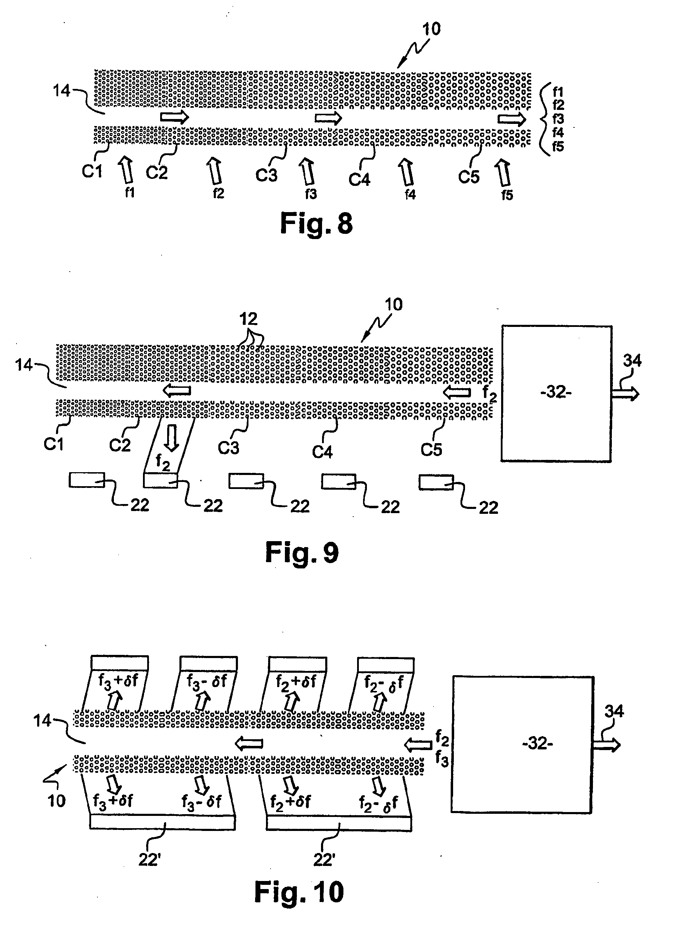

La figure 8 représente un dispositif selon l'invention utilisé en couplage de lumière sélectif en fréquence, pour le multiplexage de différentes composantes fréquentielles dans le guide d'onde.

Dans l'exemple représenté, le dispositif comprend cinq zones de couplage C1, C2, C3, C4 et C5 dont les fréquences de couplage sont f1, f2, f3, f4 et f5 respectivement.

Lorsque des signaux lumineux 30 comprenant des composantes à ces fréquences de couplage sont dirigés sur le bord aminci du composant 10, la composante de fréquence f1 des signaux 30 est injectée dans le guide d'onde dans la zone de couplage C1, la composante de fréquence f2 de ces signaux 30 est injectée dans le guide d'onde dans la zone de couplage C2, et ainsi de suite, et l'on retrouve dans le guide d'onde 14, en aval de la zone de couplage C5, un mélange linéaire des composantes des signaux lumineux 30 aux fréquences f1, f2, f3, f4 et f5.

On peut ainsi coupler au mode fondamental du guide d'onde 14 une pluralité de signaux lumineux ayant respectivement des fréquences correspondant aux fréquences de couplage des différentes zones de couplage du composant 10 lorsque ces signaux lumineux sont chacun dirigés sur une partie appropriée du bord aminci du guide d'onde.

Pour faciliter le couplage au mode fondamental du guide d'onde 14, ces parties du bord aminci du guide d'onde peuvent comprendre des lentilles divergentes 20 telles que celle représentée en figure 5.

La figure 9 représente une application d'un dispositif selon l'invention au contrôle de la fréquence du faisceau émis par une diode laser 32 au dos de laquelle est placé le composant 10 du dispositif selon l'invention, ce composant comprenant par exemple cinq zones de couplage C1 à C5 pour des fréquences f1 à f5. Si le faisceau laser émis par la diode 32 est à une fréquence f2, un signal lumineux de fréquence f2 peut être injecté dans le guide d'onde 14 dans le mode fondamental, depuis l'arrière de la diode laser 32 comme représenté.

Ce signal de fréquence f2 est couplé à un mode d'ordre élevé dans la zone de couplage C2 dont la fréquence de couplage f2 est égale à la fréquence du faisceau laser ou très proche de cette fréquence, de sorte que le signal dans le mode d'ordre élevé peut traverser le bord aminci du guide d'onde dans la zone de couplage C2 et être capté par un photodétecteur 22 associé à cette zone de couplage.

On peut également, comme représenté schématiquement en figure 10, utiliser un dispositif selon l'invention pour contrôler et commander la fréquence d'émission d'une diode laser accordable 32.

Dans ce cas, le dispositif placé à l'arrière de la diode laser 32 comprend un composant 10 du type précité, formé avec un guide d'onde 14 encadré par deux bords amincis, c'est-à-dire par des bords comprenant un faible nombre de rangées d'éléments périodiques 12.

Ce dispositif comprend par exemple quatre zones de couplage C1, C2, C3, et C4 correspondant à des fréquences de couplage f2 - $\delta$f, f2 + $\delta$f, f3 - $\delta$f, f3 + $\delta$f respectivement.

Des photodétecteurs 22, 22'tels que des photodiodes intégrées sont agencés de part et d'autre du composant 10 le long du guide d'onde 14, chaque photodiode 22 étant associée à une zone de couplage C1 à C4, et chaque photodiode 22' étant associée à deux zones de couplage C1 + C2 et C3 + C4, respectivement.

On peut utiliser le signal de sortie des photodiodes 22' pour un contrôle grossier de la fréquence f2 ou f3 émise par la diode laser 32, l'accord de la diode laser se faisant par recherche d'un maximum du signal de sortie d'une photodiode 22' tandis que les signaux de sortie des photodiodes 22 sont utilisés pour un contrôle fin basé sur une mesure différentielle entre les photodiodes 22 recevant les signaux de fréquence f2 - $\delta f$ et f2 + $\delta f$, ou entre les photodiodes 22 recevant les signaux de fréquence f3 - $\delta f$ et f3 + $\delta f$.

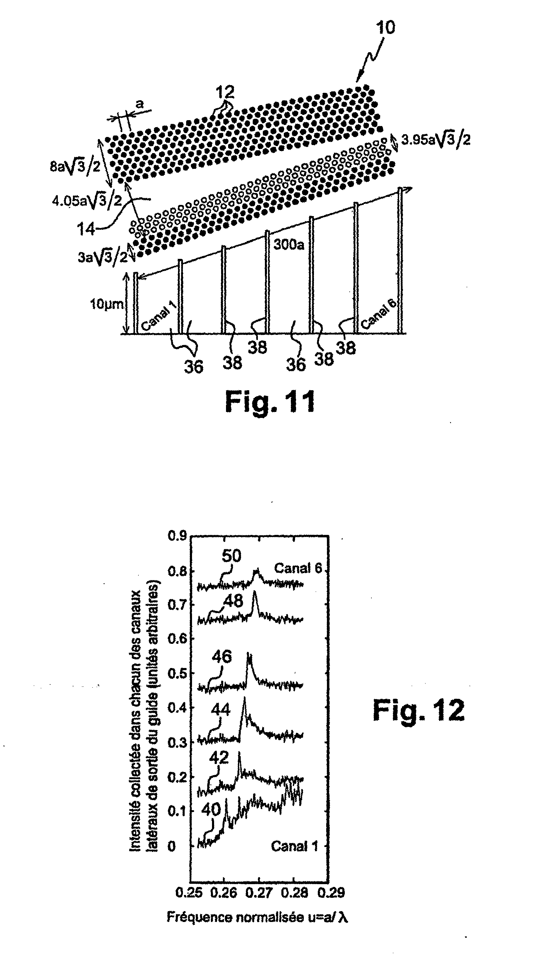

Un exemple détaillé de réalisation d'un dispositif selon l'invention va maintenant être décrit en référence à la figure 11.

Dans cette réalisation, le composant 10 est une hétérostructure verticale guidante comprenant une couche de coeur en GaInAsP, d'indice n = 3,33 et d'épaisseur e = 450 nm, qui est entourée de deux couches confinantes en InP, d'indice plus faible n = 3,17. Des réseaux triangulaires de cristaux photoniques sont gravés au travers de cette hétérostructure, la profondeur moyenne des trous étant de l'ordre de 2 $\mu$m. Le facteur de remplissage en air de ces structures est de 40%. La période a du réseau triangulaire de trous 22 est égale à 380 nm. Le guide d'onde 14 est formé dans ce composant par l'omission de trois rangées de trous et a une largeur bord à bord correspondant à celle de quatre rangées de trous 22, cette largeur variant de façon continue d'une extrémité à l'autre du guide 14 entre les valeurs indiquées en figure 11, c'est-à-dire 4,05 a $\sqrt{3}/2$ et 3,95 a $\sqrt{3}/2$.

L'un des bords longitudinaux du guide comprend 8 rangées de trous 22 et a donc une largeur égale à 8a $\sqrt{3}/2$, l'autre bord longitudinal du guide d'onde 14 comprenant 3 rangées de trous et ayant une largeur égale à 3a $\sqrt{3}/2$.

Six canaux de sortie 36 sont définis dans le composant par des tranchées d'air 38 qui jouent le rôle de réflecteurs et qui permettent d'isoler les signaux lumineux les uns des autres, en formant entre elles des guides d'onde très larges.

La longueur du guide d'onde 14 est égale à 300 fois la période a et la longueur des canaux de sortie 36 est de 10 $\mu$m.

Les courbes d'intensité des signaux lumineux captés dans les canaux de sortie 36 sont représentées schématiquement en figure 12.

Ces courbes d'intensité correspondent à une lumière incidente à l'entrée du guide 14 qui a une longueur d'onde centrale de 1,55 $\mu$m avec une largeur spectrale de 150 nm. Cette lumière est dans cet exemple produite par pompage optique d'une couche active incluse dans l'hétérostructure verticale. Cette lumière se couple au mode fondamental du guide d'onde 14 et, au cours de son passage dans la première zone de couplage correspondant au premier canal de sortie 36, une fraction spectrale de cette lumière autour de 1610 nm est couplée au mode d'ordre 5 et passe dans le premier canal de sortie 36.

Le spectre correspondant est représenté en 40 en figure 12 et l'on voit que le signal capté dans le premier canal de sortie 36 est parasité par la lumière incidente pour les fréquences normalisées élevées.

Dans le deuxième canal de sortie 36, on recueille la lumière qui résulte du couplage du mode fondamental au mode d'ordre 5 dans une partie du guide d'onde 14 ayant une largeur plus faible, la fréquence de couplage étant donc plus élevée qu'au début du guide d'onde. Le signal capté dans le second canal de sortie 36 est représenté en 42 en figure 12.

Les autres spectres 44, 46, 48 et 50 représentés en figure 12 correspondent aux signaux captés dans les autres canaux de sortie, du canal 3 au canal 6.

On peut constater sur les spectres représentés en figure 12 qu'une variation totale de largeur du guide égal à 0,1 a $\sqrt{3}/2$ induit un décalage en longueur d'onde de 50 nm, qui est donné par la différence des longueurs d'onde des signaux captés dans le canal 1 et dans le canal 6. Cette mesure correspond bien à la valeur théorique attendue.

Les caractéristiques dimensionnelles des dispositifs selon l'invention peuvent être déterminées en pratique de la façon indiquée ci-dessous. On peut d'abord procéder à une modélisation des bandes d'une section sans variation du guide d'onde du cristal photonique , dans une version sans amincissement d'un bord. Cela peut se faire par développement en onde plane ou par tout autre procédé connu, par exemple par simulation en FDTD (Finisse - Différence - Time - Domaine. Les bandes autorisées dans ces guides et les modes associés sont décrits dans des publications connues de l'homme du métier.

Ensuite, on quantifie la force de l'interaction entre le mode fondamental et le mode élevé, à partir de la mini bande interdite $\Delta\omega$ entre les deux modes selon la formule $\kappa = 4c / \Delta\omega$ (nga + ngb) où $\kappa$ est la constante de couplage, c la vitesse de la lumière, nga et ngb les indices de groupe du mode a et du mode b.

Le degré de transfert Tc d'une onde d'un mode vers l'autre pour une section uniforme de longueur L est donné par :

$$Tc = 1 - 1 / ch^2 (KL) \sim 1 - \exp (-2 KL) \text{ pour L grand,}$$

ch étant le cosinus hyperbolique. Cela permet de choisir L en fonction du taux de transfert souhaité.

Pour faire varier la fréquence de couplage dans le guide d'onde, on peut comme indiqué dans ce qui précède, faire varier la largeur du guide d'onde et/ou la période spatiale des éléments périodiques 12, et on peut aussi faire varier la forme et /ou la taille de ces éléments, par exemple la forme des trous formés dans le composant (forme circulaire, elliptique, triangulaire, ...) et leur dimension. Cette modification peut intéresser une seule des rangées encadrant le guide d'onde et pas nécessairement celle qui borde le guide d'onde.

**Revendications**

**1.** Dispositif de couplage-découplage de lumière sélectif en fréquence, comprenant un composant (10) à structure de cristal photonique constitué d'une pluralité d'éléments diélectriques (12) à répartition spatiale périodique et dans lequel un guide d'onde (14) encadré le long de ses bords longitudinaux par des rangées desdits éléments est formé par une absence d'au moins une rangée de ces dits éléments diélectriques et/ou par un décalage des rangées desdits éléments de part et d'autre du guide d'onde, **caractérisé en ce que**, sur l'un au moins desdits bords longitudinaux, le nombre de rangées desdits éléments diélectriques est réduit pour définir un bord aminci du guide d'onde et former des zones de couplage (C1 - C5) entre le guide d'onde (14) et l'extérieur du cristal photonique (10) pour des fréquences de couplage (f1 - f5), chaque zone permettant d'extraire du guide d'onde (14) et sensiblement perpendiculairement à celui-ci une composante à une fréquence correspondante d'un signal lumineux propagé dans le mode fondamental du guide d'onde et/ou d'injecter dans ce guide d'onde et sensiblement perpendiculairement à celui-ci une composante à cette fréquence d'un signal lumineux, les fréquences de couplage (f1 - f5) étant comprises dans une bande photonique interdite ou mini-stopbands MSB du guide d'onde et étant définies par des variations des paramètres dimensionnels du guide d'onde (14) et/ou du cristal photonique (10) le long des bords longitudinaux du guide d'onde, la longueur de chaque zone de couplage correspondant à quelques dizaines de périodes spatiales desdits éléments diélectriques.

**2.** Dispositif selon la revendication 1, **caractérisé en ce que** ledit nombre réduit de rangées desdits éléments diélectriques (12) dans chaque zone de couplage (C1 - C5) est compris entre 2 et 6.

**3.** Dispositif selon la revendication 1 ou 2, **caractérisé en ce que** la largeur du guide d'onde (14) varie de façon continue ou par paliers le long des bords longitudinaux.

**4.** Dispositif selon l'une des revendications 1 à 3, **caractérisé en ce que** la période spatiale (a) des éléments diélectriques (12) du cristal photonique varie de façon continue ou par paliers le long des bords longitudinaux du guide d'onde (14).

**5.** Dispositif selon la revendication 3 ou 4, **caractérisé en ce que** dans chaque zone de couplage la largeur du guide d'onde (14) ou la période spatiale (a) des éléments diélectriques (12) du cristal photonique est constante sur une longueur de guide d'onde correspondant à quelques dizaines de périodes desdits éléments diélectriques (12).

**6.** Dispositif selon l'une des revendications précédentes, **caractérisé en ce que** la taille et/ou la forme desdits éléments périodiques varient le long des bords longitudinaux du guide d'onde.

**7.** Dispositif selon l'une des revendications précédentes, **caractérisé en ce que** des lentilles convergentes (18) ou divergentes (20) vers l'extérieur du guide d'onde sont formées le long du guide d'onde par déformation des rangées d'éléments (12) du bord aminci du guide d'onde au niveau des zones de couplage (C1 - C5).

**8.** Dispositif selon l'une des revendications précédentes, **caractérisé en ce qu'**au moins un détecteur, tel par exemple qu'une photodiode intégrée (22), est placée au niveau d'une zone de couplage (C1 - C5) à l'extérieur du bord aminci du guide d'onde (14) pour capter une composante fréquentielle extraite d'un signal lumineux propagé dans le mode fondamental du guide d'onde.

**9.** Dispositif selon la revendication 8, **caractérisé en ce que** plusieurs détecteurs tels par exemple que des photodiodes intégrées (22, 22') sont agencés le long du ou des bords longitudinaux amincis du guide d'onde (14) pour capter les composantes fréquentielles du signal lumineux propagé dans le mode fondamental du guide d'onde.

10. Dispositif selon la revendication 8 ou 9, **caractérisé en ce qu'**il est associé à une diode laser (32), en particulier du type accordable pour la détection ou le contrôle de la fréquence émise par la diode laser.

11. Dispositif selon l'une des revendications 1 à 7, **caractérisé en ce qu'**il constitue un moyen de multiplexage de signaux lumineux (30) injectés dans le guide d'onde (14) à travers un bord aminci du cristal photonique.

**Patentansprüche**

1. Frequenzselelctive Lichtkopplungs- und Entkopplungseinrichtung, enthaltend einen Bestandteil (10) mit Photonenkristall-Struktur, der aus einer Mehrzahl von dielektrischen Elementen (12) mit periodischer Raumverteilung besteht, wobei ein Wellenleiter (14), der entlang seiner Längsränder von Reihen der genannten Elemente eingerahmt wird, durch Fehlen von zumindest einer Reihe dieser dielektrischen Elemente und/oder durch einen Versatz der Reihen von Elementen auf beiden Seiten des Wellenleiters gebildet wird, **dadurch gekennzeichnet, dass** zumindest an einem der Längsränder die Anzahl an Reihen der dielektrischen Elemente vermindert ist, um einen verjüngten Rand des Wellenleiters zu definieren und zwischen dem Wellenleiter (14) und dem Außenbereich des photonischen Kristalls (10) Kopplungszonen (C1 - C5) für Kopplungsfrequenzen (f1 - f5) auszubilden, wobei jede Zone gestattet, aus dem Wellenleiter (14) und im wesentlichen senkrecht zu diesem eine Komponente mit einer entsprechenden Frequenz eines Lichtsignals zu extrahieren, das sich im Haupttyp des Wellenleiters ausbreitet und/oder in diesen Wellenleiter und im wesentlichen senkrecht zu diesem eine Komponente mit dieser Frequenz eines Lichtsignals einzuspeisen, wobei die Kopplungsfrequenzen (f1 - f5) zwischen einer Photonenbaudlücke oder einem Ministopband (MSB) des Wellenleiters liegen und durch Variation der maßlichen Parameter des Wellenleiters (14) und/oder des photonischen Kristalls (10) entlang der Längsränder des Wellenleiters definiert sind, wobei die Länge einer jeden Kopplungszone mehreren zehn Raumperioden der dielektrischen Elemente entspricht.

2. Einrichtung nach Anspruch 1, **dadurch gekennzeichnet, dass** die verminderte Anzahl an Reihen der dielektrischen Elemente (12) in jeder Kopplungszone (C1 - C5) zwischen 2 und 6 beträgt.

3. Einrichtung nach Anspruch 1 oder 2, **dadurch gekennzeichnet, dass** die Breite des Wellenleiters (14) kontinuierlich oder stufenweise entlang der Längsränder variiert.

4. Einrichtung nach Anspruch 1 bis 3, **dadurch gekennzeichnet, dass** die Raumperiode (a) der dielektrischen Elemente (12) des photonischen Kristalls kontinuierlich oder stufenweise entlang der Längsränder des Wellenleiters (14) variiert.

5. Einrichtung nach Anspruch 3 oder 4, **dadurch gekennzeichnet, dass** in jeder Kopplungszone die Breite des Wellenleiters (14) oder die Raumperiode (a) der dielektrischen Elemente (12) des photonischen Kristalls über eine Länge des Wellenleiters konstant ist, die mehreren zehn Perioden der dielektrischen Elemente (12) entspricht.

6. Einrichtung nach einem der vorangehenden Ansprüche, **dadurch gekennzeichnet, dass** die Größe und/oder die Form der periodischen Elemente entlang der Längsränder des Wellenleiters variieren.

7. Einrichtung nach einem der vorangehenden Ansprüche, **dadurch gekennzeichnet, dass** nach außerhalb des Wellenleiters konvergierende Linsen (18) oder divergierende Linsen (20) entlang des Wellenleiters durch Verformung der Reihen von Elementen (12) am verjüngten Rand des Wellenleiters im Bereich der Kopplungszonen (C1 - C5) ausgebildet sind.

8. Einrichtung nach cincm der vorangehenden Ansprüche, **dadurch gekennzeichnet, dass** zumindest ein Sensor, wie etwa eine integrierte Photodiode (22) im Bereich einer Kopplungszone (C1 - C5) außerhalb des verjüngten Randes des Wellenleiters (14) angeordnet ist, um eine Frequenzkomponente aufzunehmen, die einem Lichtsignal extrahiert wird, das sich im Haupttyp des Wellenleiters ausbreitet.

9. Einrichtung nach Anspruch 8, **dadurch gekennzeichnet, dass** mehrere Sensoren, wie etwa integrierte Photodioden (22, 22'), entlang des bzw. der verjüngten Längsränder des Wellenleiters (14) angeordnet sind, um die Frequenzkomponenten des Lichtsignals aufzunehmen, das sich im Haupttyp des Wellenleiters ausbreitet.

**10.** Einrichtung nach Anspruch 8 oder 9, **dadurch gekennzeichnet, dass** dieser eine Laserdiode (32) zugeordnet ist, die insbesondere für die Erfassung bzw. Kontrolle der von der Laserdiode ausgegebenen Frequenz abstimmbar ausgeführt ist.

**11.** Einrichtung nach einem der Ansprüche 1 bis 7, **dadurch gekennzeichnet, dass** sie ein Multiplexmittel für Lichtsignale (30) darstellt, die in den Wellenleiter (14) durch einen verjüngten Rand des photonischen Kristalls eingespeist werden.

## Claims

**1.** A frequency-selective light coupler-decoupler device comprising a component (10) of photonic crystal structure constituted by a plurality of dielectric elements (12) with periodic spatial distribution, and in which a waveguide (14) having rows of said elements extending along its longitudinal edges is formed by an absence of at least one row of said dielectric elements and/or by an offset between rows of said elements on either side of the waveguide, the device being **characterized in that**, on at least one of said longitudinal edges, the number of rows of said dielectric elements is reduced so as to define a thin edge of the waveguide and form coupling zones (C1 - C5) between the waveguide (14) and the outside of the photonic crystal (10) for coupling frequencies (f1 - f5), each zone enabling a component at a frequency corresponding to a light signal propagating in the fundamental mode of the waveguide to be extracted from the waveguide (14) substantially perpendicularly thereto and/or enabling a component at said frequency of a light signal to be injected into said waveguide substantially perpendicularly thereto, the coupling frequencies (f1 - f5) lying in a photonic band gap or mini-stopbands MSB of the waveguide and being defined by variations in dimensional parameters of the waveguide (14) and/or of the photonic crystal (10) along the longitudinal edges of the waveguide, the length of each coupling zone corresponding to a few tens of spatial periods of said dielectric elements.

**2.** A device according to claim 1, **characterized in that** said the reduced number of rows of said dielectric elements (12) in each coupling zone (C1 - C5) lies in the range 2 to 6.

**3.** A device according to claim 1 or claim 2, **characterized in that** the width of the waveguide (14) varies continuously or in steps along the longitudinal edges.

**4.** A device according to one of claims 1 to 3, **characterized in that** the spatial period (a) of the dielectric elements (12) of the photonic crystal varies continuously or in steps along the longitudinal edges of the waveguide (14).

**5.** A device according to claim 3 or claim 4, **characterized in that** in each coupling zone the width of the waveguide (14) or the spatial period (a) of the dielectric elements (12) of the photonic crystal is constant over a length of the waveguide corresponding to a few lens of periods of said dielectric elements (12).

**6.** A device according to any preceding claim, **characterized in that** the size and/or the shape of said periodic elements varies/vary along the longitudinal edges of the waveguide.

**7.** A device according to any preceding claim, **characterized in that** lenses (18, 20) that converge or diverge towards the outside of the waveguide are formed along the waveguide by deforming the rows of elements (12) of the thin edge of the waveguide in the coupling zones (C1 - C5).

**8.** A device according to any preceding claim, **characterized in that** at least one detector, e.g. an integrated photodiode (22), is placed in a coupling zone (C1 - C5) outside the thin edge of the waveguide (14) in order to pick up a frequency component extracted from a light signal propagating in the fundamental mode of the waveguide.

**9.** A device according to claim 8, **characterized in that** a plurality of detectors, such as integrated photodiodes (22, 22'), for example, are arranged along the thin longitudinal edge(s) of the waveguide (14) in order to pick up the frequency component of the light signal propagating in the fundamental mode of the waveguide.

**10.** A device according to claim 8 or claim 9, **characterized in that** it is associated with a laser diode (32), in particular of the tunable type for detecting or monitoring the frequency emitted by the laser diode.

**11.** A device according to any one of claims 1 to 7, **characterized in that** it constitutes means for multiplexing light signals (30) injected into the waveguide (14) through a thin edge of the photonic crystal.

EP 1 678 540 B1

période a  période 0.8a  période 1.2a  période 0.9a  période 1.1a ~10

f1
f2
f3 ⟹  14
f4
f5

12

12

C1 ⇩  C2 ⇩  C3 ⇩  C4 ⇩  C5 ⇩ 16
f3 16  f4 16  f5 16  f2 16  f1

**Fig. 1**

période 0.8a  période 0.9a  période a  période 1.1a  période 1.2a ~10

f1
f2
f3 ⟹  12  ⟹
f4
f5

14

**Fig. 2**

C2 ⇩  C4 ⇩  C1 ⇩  C5 ⇩  ⇩ C3
f1 16  f2 16  f3 16  f4 16  f5 16

période a  12 ~10

f1
f2
f3 ⟹  largeur w  largeur 0.98w  largeur 0.96w  largeur 0.94w 12
f4
f5

12

C1 ⇩  C2 ⇩  C3 ⇩  C4 ⇩
f1  f2  f3  f4

**Fig. 3**

Fig. 4

Fig. 5

Fig. 6

Fig. 7

EP 1 678 540 B1

**Fig. 8**

**Fig. 9**

**Fig. 10**

13

**Fig. 11**

**Fig. 12**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 6310991 A

- US 2002191905 A1

**Littérature non-brevet citée dans la description**

- **KOSHIBA.** Wavelength division multiplexing and demulltiplexing with photonic crystal waveguide couplers. *Journal of Lighwave Technology,* Décembre 2001, vol. 19 (12

- **DE S. OLIVIER ; M. RATTIER ; H. BENISTY ; C. WEISBUCH et al.** Mini-stopbands of one-dimensional system : the channel waveguide in a two dimensional photonic crystal. *Physical Review B,* 01 Mars 2001, vol. 63, 113311